Europäisches Patentamt

European Patent Office

Office européen des brevets

(11) Veröffentlichungsnummer: **0 428 929 A1**

## (12) EUROPÄISCHE PATENTANMELDUNG

(21) Anmeldenummer: **90121082.3**

(22) Anmeldetag: **03.11.90**

(51) Int. Cl.5: **C04B 41/48**, C09D 167/06

(30) Priorität: **14.11.89 CH 4091/89**

(43) Veröffentlichungstag der Anmeldung:
**29.05.91 Patentblatt 91/22**

(84) Benannte Vertragsstaaten:
**AT BE CH DE DK ES FR GB GR IT LI LU NL SE**

(71) Anmelder: **Peter Hartmann Beteiligungen AG**
**Freigutstrasse 4**
**CH-8027 Zürich(CH)**

(72) Erfinder: **Hartmann, Peter**
**General-Wille-Strasse 115**
**CH-8706 Feldmeilen(CH)**

(74) Vertreter: **EGLI-EUROPEAN PATENT**
**ATTORNEYS**
**Horneggstrasse 4**
**CH-8008 Zürich(CH)**

(54) **Verbundkörper aus einem Grundkörper aus einem Baustoff oder einem Kunststoff und einem ausgehärteten Polyesterharz.**

(57) Zur Herstellung eines Verbundkörpers, bestehend aus einem Grundkörper aus einem Baustoff oder einem Kunststoff und einem ausgehärteten Polyesterharz wird zur Erreichung einer grossen Haftung zwischen dem Grundkörper und dem Polyesterharz ein Polyesterharz als Mischung eines ungesättigten Polyesterharzes und einem Wasserzusatz verwendet, das flüssig auf den Grundkörper aufgetragen wird und nach dem Aushärten eine Schutzschicht bildet. Soll mit dem Grundkörper ein Kunststoffteil verbunden werden, dient diese Mischung als Verbindungsschicht, auf welche der Kunststoffteil in flüssigem Zustand aufgebracht wird. Der Wasserzusatz zum ungesättigten Polyesterharz muss hierbei kleiner sein als diejenige Menge, die das ungesättigte Polyesterharz abbinden könnte.

EP 0 428 929 A1

# VERBUNDKÖRPER AUS EINEM GRUNDKÖRPER AUS EINEM BAUSTOFF ODER EINEM KUNSTSTOFF UND EINEM AUSGEHÄRTETEN POLYESTERHARZ

Die Erfindung betrifft einen Verbundkörper, welcher aus einem Grundkörper aus einem Baustoff oder einem Kunststoff und einem ausgehärteten Polyesterharz zusammengesetzt ist, wobei das Polyesterharz als Schicht auf dem Grundkörper aufgetragen ist und entweder als Schutzschicht für den Grundkörper oder als Verbindungsschicht zur Verbindung des Grundkörpers mit einem Baustoff oder einem Kunststoff dient, sowie einem Verfahren zur Herstellung dieses Verbundkörpers.

Die Erfindung liegt in dem Gebiet der Baumaterialien, die aus Baustoffen und Kunststoffen hergestellt werden. Hierbei werden unter Baustoffen natürliche und künstliche Stoffe und Stoffkörper für Bauzwecke verstanden.

Bekannt sind Werkstücke, die aus einem mineralischen Gesteinsteil und einem anorganischen Bindemittel zusammengesetzt und in grösstem Umfang für verschiedene Verwendungszwecke eingesetzt werden. Solche Werkstücke weisen den Vorteil auf, dass sie einerseits eine verhältnismässig grosse Festigkeit aufweisen und andererseits gegenüber anderen Materialien kostengünstig sind.

Besonders bekannt ist die Verwendung von Beton, einem Gemisch aus losen Gesteinen und einem Bindemittel, vor allem Zement. Solche Werkstücke sind aber gegen verschiedene Einflüsse insbesondere Oele, Fette und Säuren empfindlich, die an der Oberfläche Korrosionen hervorrufen. Es ist deshalb auch bekannt, einen aus einem solchen Werkstück bestehenden Grundkörper mit einem Kunststoffteil zu beschichten, der die dem Grundkörper fehlenden Eigenschaften aufweist. Solche Verbundkörper sind deshalb auch in vielen Ausführungen bekannt.

Aus DE-A-1,174,679 sind aus Beton hergestellte Formkörper bekannt, welche mit einer härtbaren Kunststoffmasse beschichtet sind. Hierzu wird in eine Form ein kalthärtbare Kunststoffmasse auf der Basis von Polyester oder Epoxyharzen eingebracht, vor deren Erhärtung erdfeuchter Betonmörtel aufgebracht, verdichtet und getrocknet wird. Damit lassen sich zwar Formkörper beliebiger Art herstellen, jedoch ist die Bindung zwischen der Kunststoffmasse und dem Beton verhältnismässig gering, sodass insbesondere bei Werkstücken, die höheren Beanspruchungen unterworfen sind, wie z.B. Rohren u. dgl., die erforderliche Festigkeit wegen der geringen gegenseitigen Bindung nicht erreicht wird, auch wenn die Werkstücke den auftretenden Beanspruchungen entsprechend dimensioniert sind.

Aus DE-A-2 008 039 ist ein Verfahren zur Herstellung von kunststoffüberzogenen Formkörpern aus Zement oder Beton bekannt, bei dem eine Kunstharzschicht in eine Form eingebracht wird und dann auf diese eine Fasermatte oder ein Fasergewebe gelegt wird, worauf dann der Mörtel eingebracht wird. Das Harz und der Mörtel sollen hierbei gleichzeitig aushärten. Bei diesem Formkörper wird erwartet, dass die Verwendung einer Fasermatte oder eines Fasergewebes, z.B. aus Glasfasern, eine bessere Verbindung zwischen dem Kunststoff und dem Mörtel bewirkt. Erfahrungen zeigen aber, dass dies nicht der Fall ist.

Auch aus DE-C-27 18 626 ist ein Formkörper bekannt, bei dem zwischen einer Kunststoffschicht und einer aus einem anorganischen Bindemittel und Zusatzstoffen bestehenden Materialschicht eine Zwischenschicht aus Natur- oder Kunstharzen eingebracht wird, welche mit Fasern bewehrt ist. Durch die Faserbewehrung soll erreicht werden, dass die Bindung zwischen der Kunststoffschicht und dem anorganischen Material so stark ist, dass sie kraftübertragend ist. Aber auch in diesem Fall haben die Versuche ergeben, dass damit das Problem einer kraftübertragenden Bindung zwischen der Kunststoffschicht und der Materialschicht nur für verhältnismässig geringe Beanspruchungen gelöst ist.

Aus EP-A-151 930 ist es bekannt, zwischen einer Kunststoffschicht und einer mineralischen Gesteinsschicht eine Zwischenschicht aus Polyesterharz vorzusehen, die keinerlei Zusätze aufweist. Hierbei wird z.B. bei der Herstellung von Rohren in einer rotierenden Trommel zunächst auf eine Kunststoffschicht eine Zwischenschicht eingebracht, auf welche dann das Betonmaterial auf die noch nicht ausgehärtete Zwischenschicht aufgebracht wird. Auch ist es möglich, z.B. bei der Herstellung eines Rohres mit einer Kernschicht aus Beton, bei der Herstellung der Innenwand auf den noch nicht vollständig abgebundenen Beton die Zwischenschicht und auf diese dann die Kunststoffschicht aufzubringen. Aber auch bei dieser Ausführungsform wird zwar eine Bindung zwischen der Kunststoffschicht und der Betonschicht erreicht, jedoch ist diese nur in geringem Masse kräfteübertragend.

Hier setzt die Erfindung ein, der die Aufgabe zugrundeliegt, eine Verbindung zwischen einem Grundkörper aus einem Baustoff oder Kunststoff und einem Polyesterharz zu gestalten, dass grosse Kräfte übertragbar sind, womit solche als Verbundkörper bezeichnete Werkstücke Beanspruchungen ausgesetzt werden können, bei denen die den zulässigen Beanspruchungen des Grundkörpers entsprechenden Kräfte auch von der Kunststoffschicht auf den Grundkörper und umgekehrt übertragen werden können.

Diese Aufgabe wird gemäss der Erfindung dadurch gelöst, dass das auf dem Grundkörper aufgetragene Schichtmaterial ein ungesättigtes Polyesterharz enthält, welchem zum Aufbringen auf den Grundkörper ein Zusatz von Wasser zugemischt ist, welcher kleiner ist als die gesamte von dem ungesättigten Polyesterharz abbindbare Wassermenge. Durch die Verwendung eines ungesättigten Polyesterharzes in dem Schichtmaterial wird in überraschender Weise erreicht, dass zwischen den Grundkörper und dem Schichtmaterial eine Haftung erreicht wird, die das Uebertragen von mindestens gleichgrossen Kräften erlaubt, wie sie für den Grundkörper zulässig sind.

Die Erfindung geht von der Ueberlegung aus, dass nicht mangelnde Bindung daran schuld ist, wenn zwischen einem Kunststoffteil und einem mit einem anorganischen Bindemittel abgebundenen Gesteinsteil keine grossen Kräfte übertragen werden können. Vielmehr scheint es vermutlich daran zu liegen, dass beim Abbinden eines Grundkörpers Restwasser verbleibt, das nicht abgebunden wird und so zu der festgestellten mangelnden kraftübertragenden Bindung führt. Wird dagegen dafür gesorgt, dass das im Grundkörper nicht abgebundene Wasser anderweitig abgebunden werden kann, wird die gewünschte grosse Bindung zwischen Kunststoffteil und Gesteinsteil erreicht, welche auch die Uebertragung gleich grosser Kräfte wie beim Grundkörper ermöglicht.

Um vorhandenes Restwasser mit Sicherheit abbinden zu können, wird deshalb das Schichtmaterial aus einem ungesättigten wasserlöslichen Polyesterharz gebildet und hierbei nur einen Teil des Wassers beigemischt, der bei der Aushärtung des Polyesterharzes abgebunden werden könnte. Wird dann der Grundkörper und die noch nicht vollständig abgebundene Verbindungsschicht zusammengebracht, wird das Restwasser durch das Schichtmaterial abgebunden. Dies kann dadurch erreicht werden, dass unmittelbar nach dem Aufbringen des Schichtmaterials auf den Grundkörper das Abbinden praktisch gleichzeitig mit dem Abbinden des Grundkörpers erfolgt. Dasselbe kann auch bei umgekehrter Reihenfolge erreicht werden, wenn das Schichtmaterial auf den noch nicht abgebundenen Grundkörper aufgebracht wird. Hierbei kann entweder das Schichtmaterial die Aussenfläche des Verbundkörpers bilden oder es kann eine zusätzliche Kunststoffschicht, beispielsweise mit einer Armierung, aufgebracht werden. Der Verbundkörper setzt sich dann aus dem Grundkörper, dem Schichtmaterial und einer Armierungsschicht zusammen. Mit einer solchen Zusammensetzung lassen sich beispielsweise Verbundrohre herstellen, die in unerwarteter Weise sehr hohen Belastungen widerstehen können. Wesentlich ist hierbei, dass die Bindung des Restwassers des Grundkörpers, z.B. des Betons, in dem Schichtmaterial auch über eine lange Zeit keinen Veränderungen unterliegt, so dass solche Rohre in Anwendungsgebieten eingesetzt werden können, die bisher den reinen Kunststoffrohren vorbehalten waren.

Beispiel 1:

Es wurde ein Rohr mit 1000 mm Durchmesser hergestellt, bei welchem eine äussere Kunststoffschicht, bestehend aus einer 30 % Glasfasern und 70 % Polyesterharz aufweisenden Armierungsschicht von 10 mm, durch eine Verbindungsschicht aus Schichtmaterial von 1,5 mm mit einer Kernschicht aus Beton von 150 mm Schichtdicke verbunden wurde, wobei die Kernschicht innenseitig mit einem Kunststoffteil, bestehend aus Schichtmaterial von 1,5 mm und einer Armierungsschicht von 8,0 mm verbunden wurde. Mit einer Prüfanordnung nach DIN 4032 wurden Scheitelbruchlasten von ca. 100 kN/m gemessen. Wird die Berechnung nach DIN 1000 wie für Stahlbetonrohre für ein im Boden verlegtes Rohr und mit Verkehrslasten nach DIN 1072 durchgeführt, errechnet sich eine Scheitelbruchlast von 65.5 kN/m. Das Schichtmaterial der beiden Verbindungsschichten für das vorstehend genannte Rohr wies folgende Zusammensetzung auf (in % Gew.):
62,7 % ungesättigtes Polyesterharz
1 % Beschleuniger
1,3 % Härter
13 % Füllstoff aus Aluminiumhydroxid
21,8 % Wasser
0,1 % Emulgator
0,1 % Triäthanolamin

Beispiel 2:

Bei einem mit einem Durchmesser von 500 mm hergestellten Rohr wurde dieselbe Zusammensetzung des Schichtmaterials wie im Beispiel 1 verwendet. Die Armierungsschicht weist eine Schichtdicke von 3,0 mm mit 5 % Glasfaserzusatz auf, die Kernschicht aus Beton weist 10 mm Schichtdicke auf, während die innere Armierungsschicht von 3,0 mm durch eine Schicht von 0,8 mm aus Schichtmaterial mit der Kernschicht verbunden wurde. Die Scheitelbruchlasten lagen für dieses Rohr etwas über denjenigen des Beispiels 1.

Die in diesen Beispielen angegebenen Werte können in folgenden Grenzen variiert werden, ohne dass erfassbare Abweichungen bezüglich der Scheitelbruchlast auftreten.
Ungesättigtes Polyesterharz 60-65 %
Wasser 20-60 %

Beschleuniger und Härter werden je nach Bedarf, d.h. je nach der gewünschten Aushärtezeit, festgelegt, wobei jedoch immer die Zugabe von Triäthanolamin und eines Emulgators erforderlich ist.

Es zeigt sich, dass die Verwendung eines Füllstoffes Vorteile bietet, da er kostengünstiger ist und trotzdem praktisch keinen festigkeitsvermindernden Einfluss ausübt. Wird das Schichtmaterial allein, d.h. ohne eine oder mehrere weitere Kunststoffschicht(en), verwendet, kann es eine sehr gute Schutzschicht für einen Grundkörper aus Beton und Mörtel z.B. für Auskleidungen von Schächten oder anderen Materialien bilden. Durch Zufügung von Pigmenten und Farbstoffen kann auch ein entsprechender Farbeffekt der Beschichtung erreicht werden. Die Haftung des Schichtmaterials auf dem Grundkörper ist gleich gross, wie wenn das Schichtmaterial als Verbindungsschicht zwischen dem Grundkörper und einem Kunststoff eingesetzt wird.

**Ansprüche**

1. Verbundkörper, welcher aus einem Grundkörper aus einem Baustoff oder einem Kunststoff und einem ausgehärteten Polyesterharz zusammengesetzt ist, wobei das Polyesterharz als Schicht auf dem Grundkörper aufgetragen ist und entweder als Schutzschicht für den Grundkörper oder als Verbindungsschicht zur Verbindung des Grundkörpers mit einem weiteren Baustoff oder Kunststoff dient, dadurch gekennzeichnet, dass das auf dem Grundkörper aufgetragene Schichtmaterial ein ungesättigtes Polyesterharz enthält, welchem zum Aufbringen auf den Grundkörper ein Zusatz von Wasser zugemischt ist, welcher kleiner ist als die gesamte, von dem ungesättigten Polyesterharz abbindbare Wassermenge.

2. Verbundkörper nach Anspruch 1, dadurch gekennzeichnet, dass der Anteil des ungesättigten Polyesterharzes und des zugemischten Wassers 80-90 % Gew. des Schichtmaterials beträgt.

3. Verbundkörper nach Anspruch 2, dadurch gekennzeichnet, dass das Schichtmaterial 10-20 % inerte Füllstoffe, z.B. Aluminiumhydroxide, enthält.

4. Verbundkörper nach Anspruch 1, dadurch gekennzeichnet, dass das Schichtmaterial mit einer Armierungsschicht zu einem Laminat verbunden ist, wobei die Armierungsschicht vorzugsweise mit 15-18 % Gew. Fasern, z.B. Glas- oder Kohlefasern, bewehrt ist.

5. Verfahren zur Herstellung von Verbundkörpern nach einem der Ansprüche 1-4, dadurch gekennzeichnet, dass dem wasserlöslichen, ungesättigten Polyesterharz höchstens die Hälfte der abbindbaren Wassermenge zugesetzt wird.

6. Verfahren nach Anspruch 5, dadurch gekennzeichnet, dass dem Polyesterharz geringe Mengen von etwa je 0,15 % Gewicht von Triäthanolamin und eines Emulgators zugesetzt werden.

7. Verfahren nach Anspruch 5 oder 6, dadurch gekennzeichnet, dass zur Herstellung eines Laminates zuerst eine Armierungsschicht aus Polyesterharz und Fasern in eine Form eingebracht und anschliessend das Schichtmaterial vor dem vollständigen Aushärten der Armierungsschicht eingebracht werden, während der Grundkörper aus Kunststoff unmittelbar nach dem Einbringen des Schichtmaterials eingebracht wird.

8. Verfahren nach Anspruch 5 oder 6, dadurch gekennzeichnet, dass auf einen, mit einem anorganischen Bindemittel abgebundenen und aus einem Baustoff bestehenden Grundkörper das Schichtmaterial nass aufgebracht wird.

9. Verfahren nach Anspruch 5 oder 6, dadurch gekennzeichnet, dass nach Einbringen einer Armierungsschicht aus Polyesterharz und Fasern das Schichtmaterial nass auf die teilweise ausgehärtete Armierungsschicht aufgebracht und unmittelbar nachfolgend ein Grundkörper aus einem anorganischen Bindemittel und einem Baustoff nass auf das nasse Schichtmaterial aufgebracht wird.

Europäisches
Patentamt

**EUROPÄISCHER
RECHERCHENBERICHT**

Nummer der Anmeldung

**EP 90 12 1082**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | EP-A-0 151 930   (P. HARTMANN) <br> * Seite 3, Absatz 3; Seite 5, Absatz 2 - Seite 7, Absatz 3; <br> Seite 10, Absatz 3; Seite 11; Ansprüche 1,2,5,6,8; Figur 1 * <br> — — — | 1,4,8,9 | C 04 B 41/48 <br> C 09 D 167/06 |
| D,A | | 2,3,5-7 | |
| D,Y | US-A-4 292 364   (L. WESCH et al.) <br> * Spalte 1, Zeilen 24-54; Spalte 2, Zeilen 37-48; Spalte 2, <br> Zeile 66 - Spalte 3, Zeile 25; Figur 1; Ansprüche 1,10,11,15 * <br> — — — | 1,4,8,9 | |
| D,A | | 2,3 | |
| A | EP-A-0 014 883   (BAYER) <br> * Seite 3, Zeile 1 - Seite 4, Zeile 5; Seite 11, Zeile 14 - Seite <br> 11, Zeile 18; Anspruch 1 * <br> — — — | 1,3,6 | |
| A | EP-A-0 248 934   (THE DOW CHEMICAL CO.) <br> * Seite 2, Zeile 1 - Seite 3, Zeile 29; Seite 37, Zeile 27 - <br> Seite 39, Zeile 29; Ansprüche 1,3,4 * <br> — — — — — | 1 | |

| RECHERCHIERTE SACHGEBIETE (Int. Cl.5) |
|---|
| C 04 B <br> C 09 D |

Der vorliegende Recherchenbericht wurde für alle Patentansprüche erstellt

| Recherchenort | Abschlußdatum der Recherche | Prüfer |
|---|---|---|
| Den Haag | 19 Februar 91 | DERZ T. |